# FASCICULE DE BREVET EUROPEEN

(11) **EP 1 535 837 B1**
(45) Date de publication et mention de la délivrance du brevet: **16.07.2008**
(21) Numéro de dépôt: 04106018.7
(22) Date de dépôt: 23.11.2004
(51) Int. Cl.: B64D 27/26

(54) **Dispositif d'accrochage reliant un moteur et une voilure d'aéronef**
Vorrichtung für die Aufhängung eines Triebwerks an einem Flugzeugflügel
Engine suspension attachment device of an engine to an aircraft wing

(30) Priorité: 25.11.2003 FR 0350906
(43) Date de publication de la demande: 01.06.2005
(73) Titulaire: AIRBUS France, 31060 Toulouse (FR)
(72) Inventeur: MACHADO, Stéphane, 31270, VILLENEUVE TOLOSANE (FR); CASSAGNE, Jérôme, 31000, TOULOUSE (FR); DEL BLANCO, Anthony, 31300, TOULOUSE (FR); MARTIN, Yvon, 31590 BONREPOS RIQUET (FR); CHAMBREUIL, Arnaud, 31620 Labastide Saint Sernin (FR)
(74) Mandataire: Poulin, Gérard

(56) Documents cités:
- FR-A1- 2 738 034
- FR-A1- 2 836 672
- US-A- 3 042 349

## Description

### DOMAINE TECHNIQUE

La présente invention se rapporte à un dispositif apte à assurer la liaison entre un moteur et une voilure d'aéronef, ce dispositif comprenant une structure rigide et des moyens d'accrochage interposés entre cette structure rigide et la voilure. En particulier, l'invention se rapporte à un dispositif apte à assurer la suspension d'un moteur sous une voilure d'aéronef, ce dispositif comprenant une structure rigide et des moyens d'accrochage de cette structure rigide sous la voilure.

Un tel dispositif peut être utilisé sur tout type d'aéronef comportant des moteurs suspendus à sa voilure ou montés au-dessus de celle-ci, tels que des turboréacteurs ou des turbopropulseurs.

### ETAT DE LA TECHNIQUE ANTERIEURE

Sur les aéronefs existants, les moteurs sont suspendus en dessous de la voilure par des dispositifs d'accrochage complexes, également appelés « EMS » (de l'anglais « Engine Mounting Structure »). Dans le cas des turboréacteurs, les dispositifs d'accrochage habituellement employés présentent une structure rigide du type caisson, également appelée « mât », c'est-à-dire formée par l'assemblage de longerons inférieurs et supérieurs raccordés entre-eux par une pluralité de nervures transversales. D'autre part, les dispositifs d'accrochage de turbopropulseurs sont quant à eux généralement constitués d'un caisson sous-aile arrière, prolongé par une structure en treillis, vers l'avant dans la direction longitudinale du turbopropulseur.

De façon connue, ces dispositifs sont notamment conçus pour permettre la transmission à la voilure des efforts statiques et dynamiques engendrés par les moteurs, tels que le poids, la poussée, ou encore les différents efforts dynamiques.

A ce titre, dans les dispositifs d'accrochage connus de l'art antérieur,comme dans le document FR 2738034, la transmission des efforts entre celui-ci et la voilure est classiquement assurée par une attache avant, une attache arrière, ainsi qu'une attache intermédiaire notamment destinée à reprendre les efforts de poussée.

Pour ce faire, l'attache avant comprend deux groupes de manilles respectivement placés verticalement de chaque côté de la structure rigide. Chaque groupe de manilles relie une ferrure à double tête solidaire des longerons supérieurs de la structure rigide du dispositif, à une ferrure à double tête solidaire d'un longeron avant de la voilure. Les liaisons entre les groupes de manilles et les ferrures sont assurées par des axes orientés selon une direction transversale par rapport à l'aéronef, c'est-à-dire selon une direction orthogonale à la fois à la verticale et à l'axe longitudinal de cet aéronef.

L'attache arrière comporte deux paires de manilles triangulaires placées dans des plans verticaux orientés selon la direction transversale de l'aéronef. Ces deux paires de manilles triangulaires relient une ferrure double solidaire du longeron supérieur arrière de la structure rigide, à une ferrure solidaire d'un longeron intermédiaire de la voilure. Les liaisons entre les deux paires de manilles et les ferrures sont alors ici assurées par des axes orientés selon la direction longitudinale de l'aéronef.

L'attache intermédiaire destinée à reprendre les efforts de poussée, également appelée attache « spigot », est de façon générale matérialisée par une rotule d'axe vertical fixée dans le longeron supérieur arrière de la structure rigide, entre l'attache avant et l'attache arrière. Cette attache spigot est un pion de cisaillement fixé sous la voilure de l'aéronef, de façon à faire saillie verticalement dans la rotule susmentionnée.

Dans cet agencement classique et isostatique de l'art antérieur, les efforts longitudinaux (poussée, inverseurs) sont transmis par l'attache intermédiaire. Les efforts transversaux se répartissent entre cette même attache intermédiaire et l'attache arrière, tandis que les efforts selon la direction verticale passent simultanément par l'attache avant et l'attache arrière.

Par ailleurs, le moment selon l'axe longitudinal est repris par l'attache avant, et le moment selon l'axe transversal est repris dans la direction verticale par l'ensemble formé par les attaches avant et arrière. Enfin, le moment selon l'axe vertical est repris dans la direction transversale par l'ensemble formé par l'attache intermédiaire et l'attache arrière.

Si la solution qui vient d'être présentée permet de transmettre de façon satisfaisante les efforts statiques et dynamiques engendrés par le moteur dans toutes les conditions de vol, elle présente néanmoins des inconvénients non-négligeables.

Effectivement, il est indiqué que dans la mesure où la fonction principale de l'attache intermédiaire est de reprendre les efforts de poussée, celle-ci présente ainsi nécessairement un encombrement important ainsi qu'une masse relativement élevée. Naturellement, cela conduit inévitablement à une augmentation sensible de la masse globale du dispositif d'accrochage.

D'autre part, il est noté que la plaque de fixation solidaire du pion de cisaillement, requise pour assurer l'assemblage de ce dernier sous la voilure de l'aéronef, est une pièce de conception complexe et difficile à définir. Ceci s'explique bien évidemment en raison de la nécessité de faire coopérer cette plaque de fixation avec les éléments constitutifs de la structure de la voilure, c'est-à-dire principalement des longerons et des nervures.

### EXPOSÉ DE L'INVENTION

L'invention a donc pour but de proposer un dispositif d'accrochage reliant un moteur et une voilure d'aéronef, ce dispositif remédiant au moins partiellement aux inconvénients mentionnés ci-dessus relatifs aux réalisations de l'art antérieur.

Plus précisément, le but de l'invention est de présenter un dispositif d'accrochage reliant un moteur et une voilure d'aéronef, comprenant notamment des moyens d'accrochage interposés entre cette structure rigide et la voilure, et dont la conception de ces moyens est sensiblement simplifiée par rapport à celle rencontrée antérieurement.

Pour ce faire, l'invention a pour objet un dispositif d'accrochage reliant un moteur et une voilure d'aéronef, le dispositif comportant une structure rigide et des moyens d'accrochage interposés entre cette structure rigide et la voilure, les moyens d'accrochage comportant une attache avant ainsi qu'une attache arrière comprenant au moins une manille triangulaire placée dans un plan vertical orienté selon une direction transversale de l'aéronef, cette attache avant étant constituée de deux demi-attaches disposées respectivement de part et d'autre d'un plan vertical passant par un axe longitudinal du moteur. Selon l'invention, chaque demi-attache comprend au moins une manille triangulaire placée dans un plan vertical orienté selon une direction longitudinale de cet aéronef et les moyens d'accrochage sont exclusivement constitués par les attaches avant et arrière susmentionnées.

Avantageusement, la conception des moyens d'accrochage du dispositif selon l'invention est largement simplifiée par rapport à celle rencontrée dans les dispositifs d'accrochage de l'art antérieur, principalement en raison du fait qu'il n'est plus requis d'attache intermédiaire du type attache spigot.

Effectivement, dans cet agencement isostatique de la présente invention, les efforts longitudinaux sont transmis par chacune des demi-attaches de l'attache avant, les efforts transversaux sont transmis par l'attache arrière, et les efforts selon la direction verticale passent simultanément par les deux demi-attaches avant et l'attache arrière comprenant chacune au moins une manille triangulaire.

Ainsi, la suppression de cette attache intermédiaire du type spigot engendre inéluctablement une diminution considérable de la masse et de l'encombrement relatifs aux moyens d'accrochage, et par conséquent une baisse non-négligeable de la masse globale et du coût du dispositif d'accrochage.

De préférence, l'attache arrière comporte une paire de manilles triangulaires placées dans des plans verticaux orientés selon la direction transversale de l'aéronef, et l'attache avant comprend, de part et d'autre du plan vertical passant par l'axe longitudinal du moteur, une paire de manilles triangulaires placées dans des plans verticaux orientés selon la direction longitudinale de l'aéronef. Bien entendu, le fait de prévoir des paires de manilles permet d'obtenir des caractéristiques de résistance mécanique supérieures à celles obtenues avec des solutions mettant en oeuvre des manilles uniques.

On peut alors faire en sorte que la paire de manilles triangulaires de l'attache arrière soit raccordée à la structure rigide et à la voilure de l'aéronef par l'intermédiaire d'axes orientés selon la direction longitudinale de cet aéronef. De la même façon, on peut aussi prévoir que chacune des deux paires de manilles triangulaires de l'attache avant est raccordée à la structure rigide et à la voilure de l'aéronef par l'intermédiaire d'axes orientés selon la direction transversale de cet aéronef.

De manière préférentielle, l'attache arrière comporte en outre une ferrure solidaire de la structure rigide, reliée à la paire de manilles triangulaires par l'intermédiaire d'au moins un axe orienté selon la direction longitudinale de cet aéronef, et l'attache arrière comporte également une ferrure solidaire de la voilure, reliée à la paire de manilles triangulaires par l'intermédiaire d'au moins un axe orienté selon cette même direction longitudinale.

De manière analogue, l'attache avant comporte de préférence deux ferrures solidaires de la structure rigide, chaque ferrure étant reliée à l'une des deux paires de manilles triangulaires par l'intermédiaire d'au moins un axe orienté selon la direction transversale de cet aéronef, et l'attache avant comporte également deux ferrures solidaires de la voilure, chaque ferrure étant reliée à l'une des deux paires de manilles triangulaires par l'intermédiaire d'au moins un axe orienté selon la direction transversale de cet aéronef.

En outre, pour les attaches avant et arrière, chaque manille triangulaire est raccordée à la structure rigide et à la voilure de l'aéronef à l'aide de trois axes la traversant, de préférence perpendiculairement, respectivement à proximité de ses trois sommets.

Selon un premier mode de réalisation préféré de la présente invention, au moins une manille triangulaire est raccordée à la structure rigide par l'une de ses bases, et à la voilure par le sommet opposé à cette même base. En d'autres termes, au moins une manille triangulaire est agencée de sorte qu'elle s'étende verticalement vers le haut, de l'une de ses bases vers le sommet opposé à cette base.

Selon un second mode de réalisation préféré de la présente invention, au moins une manille triangulaire est raccordée à la structure rigide par l'un de ses sommets, et à la voilure par la base opposée à ce même sommet. Ici aussi, cela veut dire qu'au moins une manille triangulaire est agencée de sorte qu'elle s'étende verticalement vers le bas, de l'une de ses bases vers le sommet opposé à cette base.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un dispositif d'accrochage reliant un moteur et une voilure d'aéronef, selon un premier mode de réalisation préféré de la présente invention ;
- la figure 2 représente une vue agrandie et éclatée en perspective d'une partie de l'attache avant du dispositif d'accrochage de la figure 1 ;
- la figure 3 représente une vue agrandie et éclatée en perspective de l'attache arrière du dispositif d'accrochage de la figure 1 ; et
- la figure 4 représente une vue partielle en perspective d'un dispositif d'accrochage reliant un moteur et une voilure d'aéronef, selon un second mode de réalisation préféré de la présente invention.

### EXPOSÉ DÉTAILLÉ DE MODES DE RÉALISATION PRÉFÉRÉS

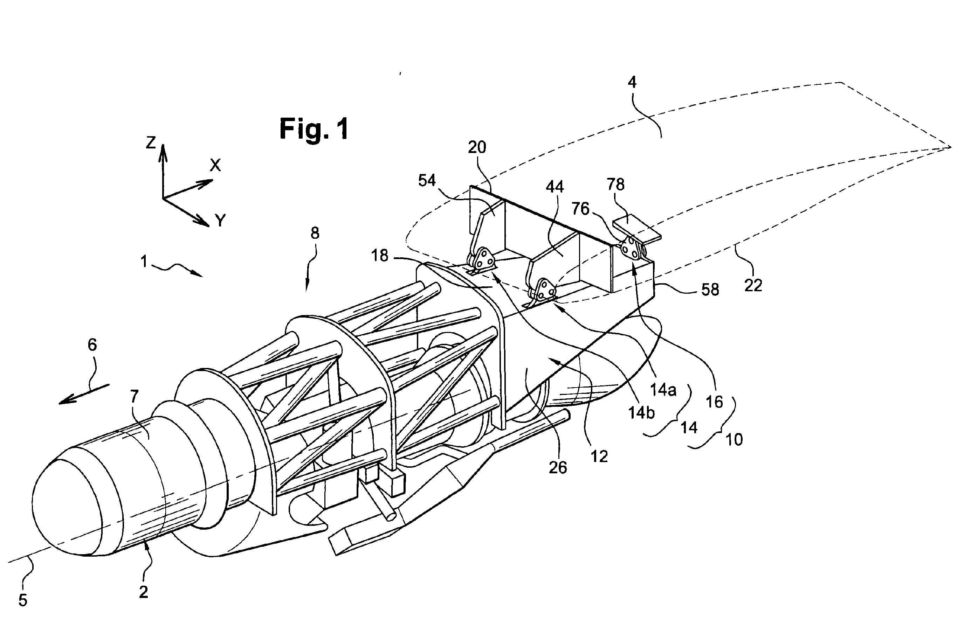

En référence à la figure 1, on voit un dispositif d'accrochage 1 selon un premier mode de réalisation préféré de la présente invention, ce dispositif 1 étant destiné à assurer la suspension d'un turbopropulseur 2 sous une aile d'aéronef représentée uniquement schématiquement pour des raisons évidentes de clarté, et désignée de façon générale par la référence numérique 4. Il est noté que le dispositif d'accrochage 1 représenté sur cette figure 1 est adapté pour coopérer avec un turbopropulseur 2, mais il pourrait bien entendu s'agir d'un dispositif conçu pour suspendre tout autre type de moteur, tel qu'un turboréacteur, sans sortir du cadre de l'invention. De plus, si le dispositif 1 du premier mode de réalisation préféré est conçu pour assurer la suspension du moteur 2 sous la voilure 4, il est noté que celui-ci aurait également pu être réalisé pour permettre le montage du moteur 2 au-dessus de cette même voilure 4.

Dans toute la description qui va suivre, par convention, on appelle X la direction parallèle à un axe longitudinal 5 du moteur 2, Y la direction orientée transversalement par rapport à l'aéronef, et Z la direction verticale, ces trois directions étant orthogonales entre-elles. Ainsi, il est à comprendre que les directions X, Y et Z correspondant respectivement à des directions longitudinale, transversale et de hauteur, à la fois pour l'aéronef et pour le moteur 2.

Il est précisé que l'axe longitudinal 5 du moteur 2 est à comprendre comme étant l'axe longitudinal du carter moteur, et non l'axe longitudinal de son hélice propulsive 7.

D'autre part, les termes « avant » et « arrière » sont à considérer par rapport à une direction d'avancement de l'aéronef rencontrée suite à la poussée exercée par les moteurs 2, cette direction étant représentée schématiquement par la flèche 6.

Sur la figure 1, on peut voir que seule une structure rigide 8 du dispositif d'accrochage 1 a été représentée, accompagnée de moyens d'accrochage 10 interposés entre cette structure rigide 8 et la voilure 4 de l'aéronef, ces moyens 10 appartenant naturellement au dispositif d'accrochage 1 et assurant l'accrochage de cette structure rigide 8 sous la voilure 4. Les autres éléments constitutifs non-représentés de ce dispositif 1, du type structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De la même manière, la structure rigide 8 étant similaire à celles rencontrées dans les dispositifs de l'art antérieur, et présentant de toute façon une conception spécifique et différente en fonction de la nature du moteur qu'elle doit suspendre, elle ne sera par conséquent pas davantage décrite.

En revanche, les moyens d'accrochage 10, situés globalement vers l'arrière de la structure rigide 8, et plus précisément au niveau d'un caisson sous-aile 12 dans le cas représenté d'une structure rigide d'un turbopropulseur, sont spécifiques à la présente invention, et vont donc être présentés de façon détaillée ci-dessous.

De façon générale, les moyens d'attache 10 sont constitués d'une attache avant 14, ainsi que d'une attache arrière 16. Comme cela sera exposé en détails ci-dessous, l'attache avant 14 relie un longeron supérieur 18 du caisson sous-aile 12 de la structure rigide 8, à un longeron vertical avant 20 faisant partie intégrante de la structure de l'aile 4 et s'étendant sensiblement selon une direction principale longitudinale (non représentée) de cette même aile 4.

D'autre part, l'attache arrière 16 relie une extrémité arrière du longeron supérieur 18 du caisson sous-aile 12, à un longeron horizontal intermédiaire (non représenté) faisant partie intégrante de la structure de l'aile 4 et s'étendant également sensiblement selon la direction principale longitudinale de cette même aile 4.

Comme on peut l'apercevoir sur la figure 1, l'attache avant 14 est en fait constituée de deux demi-attaches 14a et 14b, sensiblement identiques, disposées de part et d'autre d'un plan vertical (non représenté) passant par l'axe longitudinal 5 du moteur 2, et agencées de préférence symétriquement par rapport à ce même plan. Pour cette raison, une seule des deux demi-attaches 14a,14b va être détaillée ci-après.

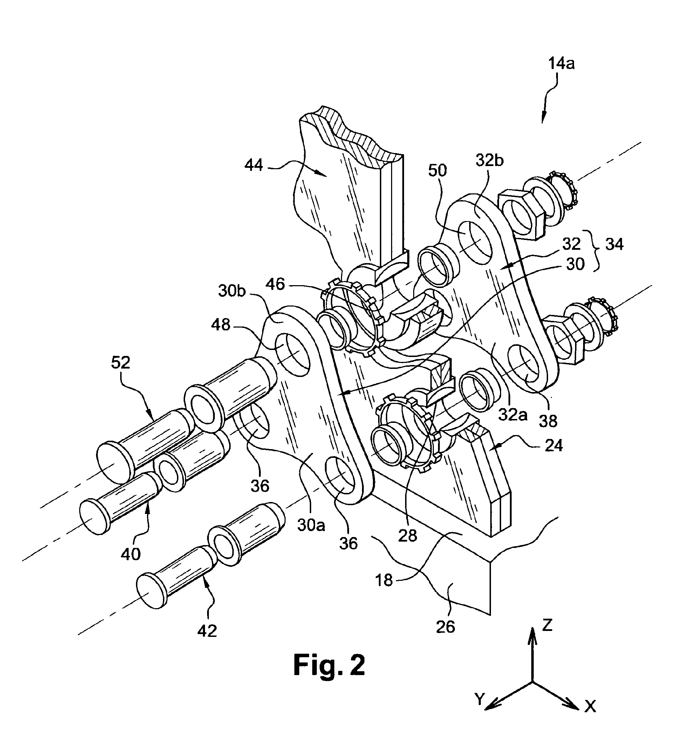

En référence plus spécifiquement à la figure 2, on voit que la demi-attache 14a comporte tout d'abord une ferrure 24, de préférence double, et solidaire du longeron 18 du caisson sous-aile 12. Cette ferrure 24 s'étend dans un plan vertical orienté selon la direction longitudinale X, à savoir selon un plan XZ, quasiment dans le prolongement d'un flan latéral 26 du caisson sous-aile 12. En outre, elle est percée de deux trous traversants 28 (un seul étant visible sur la figure 2), orientés selon la direction transversale Y de l'aéronef.

Deux manilles triangulaires 30 et 32, de préférence identiques et prenant grossièrement la forme d'un triangle équilatéral, sont respectivement agencées de part et d'autre de cette ferrure 24, également dans des plans XZ. Ainsi, la manille extérieure 30 et la manille intérieure 32 forment ensemble une paire de manilles triangulaires 34, dont les manilles 30,32 sont parallèles entre-elles. A ce titre, il est précisé que la paire de manilles triangulaires 34 pourrait également être réalisée à l'aide de manilles doubles, sans sortir du cadre de l'invention. Dans un tel cas, la paire de manilles 34 comporterait alors quatre manilles identiques réparties en deux ensembles de deux manilles triangulaires superposées, respectivement agencés de chaque côté de la ferrure 24.

Dans ce premier mode de réalisation préféré de la présente invention, la manille extérieure 30 est agencée de sorte que c'est l'une de ses bases 30a qui est montée sur la ferrure 24, cette base 30a étant orientée sensiblement selon la direction longitudinale X. De cette manière, on peut alors comprendre que la manille 30 est placée de sorte qu'elle s'étende verticalement vers le haut selon la direction Z, de sa base 30a, vers un sommet opposé 30b à cette base 30a.

Ainsi, à proximité de chacun des deux sommets (non référencés) associés à cette base 30a, il est réalisé un trou traversant 36, orienté selon la direction transversale Y. De la même manière, la manille intérieure 32 est agencée de façon identique à celle de la manille extérieure 30, à savoir que c'est l'une de ses bases 32a qui est montée sur la ferrure 24, et que cette base 32a est orientée sensiblement selon la direction longitudinale X. Par conséquent, ici aussi, il est pratiqué un trou traversant 38 orienté selon la direction transversale Y, à proximité de chacun des deux sommets (non référencés) associés à cette base 32a.

Pour assurer la liaison entre la paire de manilles 34 et la ferrure 24, la demi-attache 14a comporte alors deux axes 40 et 42 orientés selon la direction transversale Y, et disposés dans un même plan horizontal XY. En effet, l'axe avant 40, de préférence double comme représenté sur la figure 2, traverse successivement l'un des deux trous traversants 36 de la manille triangulaire extérieure 30, l'un des deux trous traversants 28 pratiqués dans la ferrure 24, ainsi que l'un des deux trous traversants 38 de la manille triangulaire intérieure 32. De manière analogue, l'axe arrière 42, de préférence également double, traverse successivement l'autre des deux trous traversants 36 de la manille triangulaire extérieure 30, l'autre des deux trous traversants 28 pratiqués dans la ferrure 24, ainsi que l'autre des deux trous traversants 38 de la manille triangulaire intérieure 32.

Par ailleurs, la demi-attache 14a est pourvue d'une autre ferrure 44 orientée dans un plan vertical XZ et prenant la forme d'une nervure de la structure de l'aile 4, cette nervure 44 étant solidaire du longeron 20 comme cela est clairement visible sur la figure 1. Dans une partie avant inférieure de cette ferrure 44 orientée verticalement selon la direction longitudinale X, celle-ci est percée d'un trou unique traversant 46, orienté selon la direction transversale Y de l'aéronef.

Pour assurer la fixation de la paire de manilles triangulaires 34 sur cette ferrure 44, la manille extérieure 30 dispose d'un trou traversant 48 orienté selon la direction transversale Y, ce trou 48 étant pratiqué à proximité du sommet 30b opposé à la base 30a susmentionnée. De manière analogue, la manille intérieure 32 dispose d'un trou traversant 50 orienté selon la direction transversale Y, ce trou 50 étant pratiqué à proximité d'un sommet 32b opposé à la base 32a indiquée précédemment.

Avec un tel agencement, un axe supérieur 52 orienté selon la direction transversale Y, disposé au-dessus des axes 40 et 42 et étant de préférence double comme représenté sur la figure 2, peut alors assurer la liaison entre la paire de manilles 34 et la ferrure 44, en traversant successivement le trou traversant 48 de la manille triangulaire extérieure 30, le trou traversant 46 de la ferrure 44, ainsi que le trou traversant 50 de la manille triangulaire intérieure 32.

Comme cela a été mentionné ci-dessus, la demi-attache 14b ne va pas être davantage décrite, dans la mesure où seule la longueur selon la direction X de sa ferrure 54 interposée entre le longeron 20 et la paire de manilles triangulaires (non référencée), diffère par rapport à la longueur selon la direction X de la ferrure 44 de la demi-attache 14a. Bien entendu, cela s'explique par le positionnement du longeron 20 de l'aile 4, qui se trouve dans un plan vertical incliné par rapport à un plan YZ.

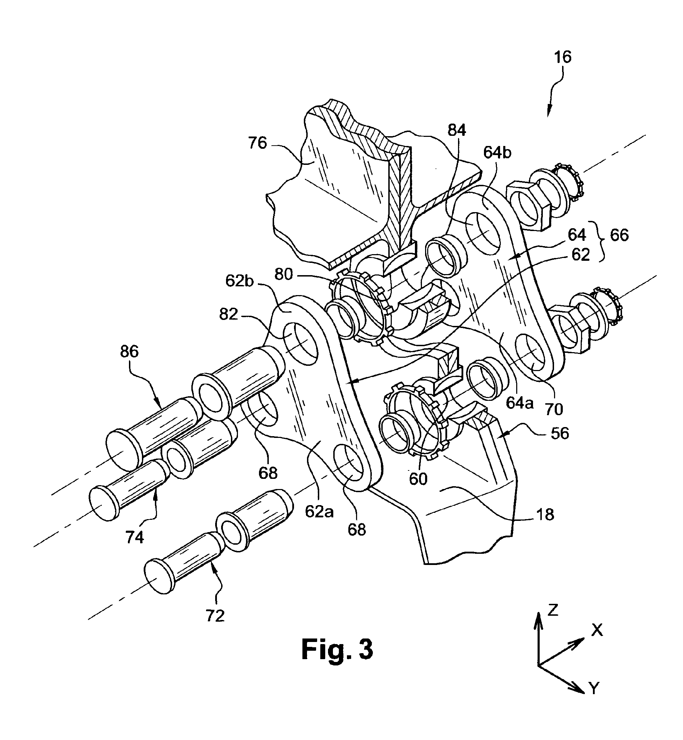

En référence à présent à la figure 3, on voit que l'attache arrière 16, sensiblement identique aux demi-attaches 14a,14b, comporte une ferrure double 56 solidaire d'une extrémité arrière du longeron 18 du caisson sous-aile 12. Cette ferrure 56 s'étend dans un plan vertical orienté selon la direction transversale Y, à savoir dans un plan YZ, quasiment dans le prolongement d'une cloison verticale arrière 58 du caisson sous-aile 12. De plus, la ferrure 56 présente une symétrie par rapport au plan vertical passant par l'axe longitudinal 5 du moteur 2.

Cette ferrure 56 est percée de deux trous traversants 60 (un seul étant visible sur la figure 3), orientés selon la direction longitudinale X de l'aéronef.

Deux manilles triangulaires 62 et 64, de préférence identiques et prenant grossièrement la forme d'un triangle équilatéral, sont respectivement agencées de part et d'autre de cette ferrure 56, également dans des plans YZ. Ainsi, la manille avant 62 et la manille arrière 64 forment ensemble une paire de manilles triangulaires 66, dont les manilles 62,64 sont parallèles entre-elles. A ce titre, il est précisé que la paire de manilles triangulaires 66 pourrait ici aussi être réalisée à l'aide de manilles doubles, sans sortir du cadre de l'invention.

Dans ce premier mode de réalisation préféré de la présente invention, la manille avant 62 est agencée de sorte que c'est l'une de ses bases 62a qui est montée sur la ferrure 56, cette base 62a étant orientée sensiblement selon la direction transversale Y. De cette manière, on peut alors comprendre que la manille 62 est placée de sorte qu'elle s'étende verticalement vers le haut selon la direction Z, de sa base 62a, vers un sommet opposé 62b à cette base 62a.

Ainsi, à proximité de chacun des deux sommets (non référencés) associés à cette base 62a, il est réalisé un trou traversant 68, orienté selon la direction longitudinale X. De la même manière, la manille arrière 64 est agencée de façon identique à celle de la manille avant 62, à savoir que c'est l'une de ses bases 64a qui est montée sur la ferrure 56, et que cette base 64a est orientée sensiblement selon la direction transversale Y. Par conséquent, ici aussi, il est pratiqué un trou traversant 70 orienté selon la direction longitudinale X, à proximité de chacun des deux sommets (non référencés) associés à cette base 64a.

Pour assurer la liaison entre la paire de manilles 66 et la ferrure 56, l'attache arrière 16 comporte alors deux axes latéraux 72 et 74 orientés selon la direction longitudinale X, et disposés dans un même plan horizontal XY. En effet, l'axe latéral 72, de préférence double comme représenté sur la figure 3, traverse successivement l'un des deux trous traversants 68 de la manille triangulaire avant 62, l'un des deux trous traversants 60 pratiqués dans la ferrure 56, ainsi que l'un des deux trous traversants 70 de la manille triangulaire arrière 64. De manière analogue, l'axe latéral 74, de préférence également double, traverse successivement l'autre des deux trous traversants 68 de la manille triangulaire avant 62, l'autre des deux trous traversants 60 pratiqués dans la ferrure 56, ainsi que l'autre des deux trous traversants 70 de la manille triangulaire arrière 64.

Par ailleurs, l'attache arrière 16 est pourvue d'une autre ferrure 76 orientée globalement dans un plan vertical YZ et se prolongeant vers le haut par une plaque horizontale 78, cette plaque 78 étant solidaire du longeron intermédiaire horizontal de l'aile 4. Par conséquent, la ferrure 76 traverse un revêtement d'intrados 22 de l'aile 4.

Dans une partie inférieure, cette ferrure 76 est percée d'un trou unique traversant 80, orienté selon la direction longitudinale X de l'aéronef.

Pour assurer la fixation de la paire de manilles triangulaires 66 sur cette ferrure 76, la manille avant 62 dispose d'un trou traversant 82 orienté selon la direction longitudinale X, ce trou 82 étant pratiqué à proximité du sommet 62b opposé à la base 62a susmentionnée. De manière analogue, la manille arrière 64 dispose d'un trou traversant 84 orienté selon la direction longitudinale X, ce trou 84 étant pratiqué à proximité d'un sommet 64b opposé à la base 64a indiquée précédemment.

Avec un tel agencement, un axe supérieur 86, disposé au-dessus des axes latéraux 72,74 et étant de préférence double comme représenté sur la figure 3, peut alors assurer la liaison entre la paire de manilles 66 et la ferrure 76, en traversant successivement le trou traversant 82 de la manille triangulaire avant 62, le trou traversant 80 de la ferrure 76, ainsi que le trou traversant 84 de la manille triangulaire arrière 64.

Dans cet agencement isostatique de la présente invention, les efforts longitudinaux (poussée, inverseurs) sont transmis par l'attache avant 14. Les efforts transversaux sont transmis par l'attache arrière 16, tandis que les efforts selon la direction verticale passent simultanément par l'attache avant 14 et l'attache arrière 16. Il est noté qu'avec une telle configuration, les efforts longitudinaux transitent directement par les nervures 44 et 54 de la structure de l'aile 4, ces nervures 44 et 54 étant situées globalement vers l'arrière par rapport aux demi-attaches 14a,14b. De plus, il est donc à comprendre que chaque demi-attache 14a, 14b est conçue de façon à reprendre et faire passer les efforts selon les directions X et Z, et non selon la direction Y. Parallèlement, l'attache arrière 16 est conçue de façon à reprendre et faire passer les efforts selon les directions Y et Z, et non selon la direction X.

Par ailleurs, le moment selon l'axe longitudinal est repris dans la direction verticale par les deux demi-attaches 14a,14b de l'attache avant 14, et le moment selon l'axe transversal est repris également dans la direction verticale par l'ensemble formé par les attaches avant 14 et arrière 16. Enfin, le moment selon l'axe vertical est repris dans la direction longitudinale par les deux demi-attaches 14a,14b de l'attache avant 14.

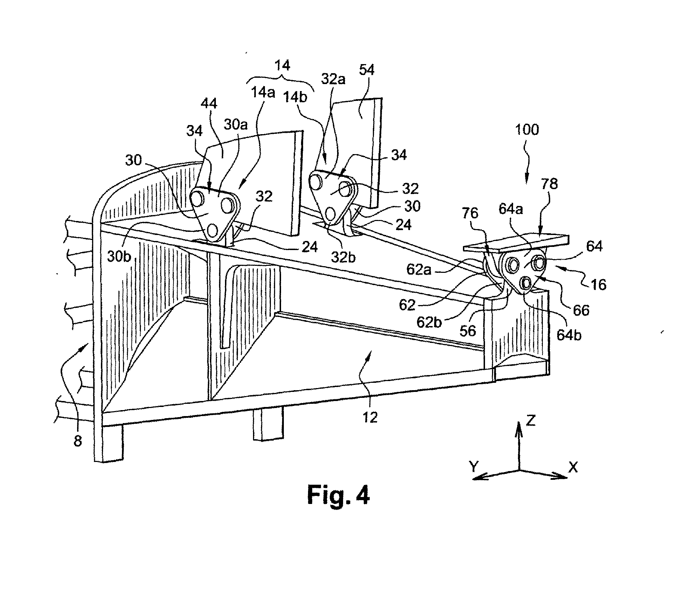

En référence à la figure 4, on voit une partie d'un dispositif d'accrochage 100 selon un second mode de réalisation préféré de la présente invention. Ce dispositif 100 est sensiblement identique au dispositif 1 selon le premier mode de réalisation décrit ci-dessus. Par conséquent, les éléments portant les mêmes références numériques correspondent à des éléments identiques ou similaires.

Ainsi, on peut voir sur cette figure 4 que le changement entre les dispositifs d'accrochage 1 et 100 réside dans la disposition de manilles appartenant aux attaches avant 14 et arrière 16 des moyens d'accrochage 10.

Effectivement, si l'ensemble des manilles triangulaires 30,32,62,64 du dispositif 1 étaient situées de sorte qu'elles s'étendent verticalement vers le haut, de l'une de leurs bases vers le sommet opposé à cette base, ces mêmes manilles triangulaires du dispositif 100 s'étendent ici également verticalement, mais de l'une de leurs bases vers le sommet opposé à cette base en allant vers le bas. En d'autres termes, les manilles triangulaires des paires de manilles 34 et 66 ont été pivotées de 180° respectivement selon la direction transversale Y et la direction longitudinale X, par rapport à leurs positions occupées dans le premier mode de réalisation préféré.

Par conséquent, comme cela est clairement visible sur la figure 4, les bases 30a et 32a des deux demi-attaches 14a,14b de l'attache avant 14 sont reliées aux ferrures 44 et 54 de l'aile 4, et les sommets opposés 30b et 32b sont reliés aux ferrures 24 solidaires de la structure rigide 8.

D'autre part, les bases 62a et 64a de l'attache arrière 16 sont reliées à la ferrure 76 solidaire de l'aile 4, et les sommets opposés 62b et 64b sont reliés à la ferrure 56 solidaire de la structure rigide 8.

Bien entendu, diverses modifications peuvent être apportées par l'homme du métier aux dispositifs d'accrochage 1 et 100 qui viennent d'être décrits, uniquement à titre d'exemples non limitatifs.

## Revendications

1. Dispositif d'accrochage (1,100) reliant un moteur (2) et une voilure (4) d'aéronef, ledit dispositif comportant une structure rigide (8) et des moyens d'accrochage (10) interposés entre ladite structure rigide (8) et la voilure (4), lesdits moyens d'accrochage (10) comportant une attache avant (14) ainsi qu'une attache arrière (16) comprenant au moins une manille triangulaire (62,64) placée dans un plan vertical orienté selon une direction transversale (Y) de l'aéronef, ladite attache avant (14) étant constituée de deux demi-attaches (14a, 14b) disposées respectivement de part et d'autre d'un plan vertical passant par un axe longitudinal (5) du moteur (2), **caractérisé en ce que** chaque demi-attache (14a, 14b) comprend au moins une manille triangulaire (30,32) placée dans un plan vertical orienté selon une direction longitudinale (X) de l'aéronef, et **en ce que** lesdits moyens d'accrochage (10) sont exclusivement constitués par lesdites attaches avant (14) et arrière (16).

2. Dispositif d'accrochage (1, 100) d'un moteur (2) selon la revendication 1, **caractérisé en ce que** chacune des deux demi-attaches (14a, 14b) est conçue de façon à reprendre des efforts s'exerçant selon la direction longitudinale (X) et selon une direction verticale (Z) de l'aéronef, et **en ce que** ladite attache arrière (16) est conçue de façon à reprendre des efforts s'exerçant selon la direction transversale (Y) et selon la direction verticale (Z).

3. Dispositif d'accrochage (1,100) d'un moteur (2) selon la revendication 1 ou la revendication 2, **caractérisé en ce que** ladite attache arrière (16) comporte une paire de manilles triangulaires (66) placées dans des plans verticaux orientés selon la direction transversale (Y) de l'aéronef, et **en ce que** ladite attache avant (14) comprend, de part et d'autre du plan vertical passant par l'axe longitudinal (5) du moteur (2), une paire de manilles triangulaires (34) placées dans des plans verticaux orientés selon la direction longitudinale (X) de l'aéronef.

4. Dispositif d'accrochage (1,100) d'un moteur (2) selon la revendication 3, **caractérisé en ce que** ladite paire de manilles triangulaires (66) de l'attache arrière (16) est raccordée à la structure rigide (8) et à la voilure (4) de l'aéronef par l'intermédiaire d'axes (72,74,86) orientés selon la direction longitudinale (X) de cet aéronef.

5. Dispositif d'accrochage (1,100) d'un moteur (2) selon la revendication 3 ou la revendication 4, **caractérisé en ce que** chacune des deux paires de manilles triangulaires (34) de l'attache avant (14) est raccordée à la structure rigide (8) et à la voilure (4) de l'aéronef par l'intermédiaire d'axes (40,42,52) orientés selon la direction transversale (Y) de cet aéronef.

6. Dispositif d'accrochage (1,100) d'un moteur (2) selon l'une quelconque des revendications 3 à 5, **caractérisé en ce que** ladite attache arrière (16) comporte en outre une ferrure (56) solidaire de la structure rigide (8), reliée à ladite paire de manilles triangulaires (66) par l'intermédiaire d'au moins un axe (70,72) orienté selon la direction longitudinale (X) de cet aéronef, et **en ce que** ladite attache arrière (16) comporte également une ferrure (76) solidaire de la voilure (4), reliée à ladite paire de manilles triangulaires (66) par l'intermédiaire d'au moins un axe (86) orienté selon la direction longitudinale (X) de cet aéronef.

7. Dispositif d'accrochage (1,100) d'un moteur (2) selon l'une quelconque des revendications 3 à 6, **caractérisé en ce que** ladite attache avant (14) comporte en outre deux ferrures (24) solidaires de la structure rigide (8), chaque ferrure (24) étant reliée à l'une des deux paires de manilles triangulaires (34) par l'intermédiaire d'au moins un axe (40,42) orienté selon la direction transversale (Y) de cet aéronef, et **en ce que** ladite attache avant (14) comporte également deux ferrures (44,54) solidaires de la voilure (4), chaque ferrure (44,54) étant reliée à l'une des deux paires de manilles triangulaires (34) par l'intermédiaire d'au moins un axe (52) orienté selon la direction transversale (Y) de cet aéronef.

8. Dispositif d'accrochage (1,100) d'un moteur (2) selon l'une quelconque des revendications précédentes, **caractérisé en ce que** chaque manille triangulaire (30,32,62,64) est raccordée à la structure rigide (8) et à la voilure (4) de l'aéronef à l'aide de trois axes (40,42,52,72,74,86) la traversant, respectivement à proximité de ses trois sommets (30b,32b,62b,64b).

9. Dispositif d'accrochage (1) d'un moteur (2) selon l'une quelconque des revendications précédentes, **caractérisé en ce qu'**au moins une manille triangulaire (30,32,62,64) est raccordée à la structure rigide (8) par l'une de ses bases (30a,32a,62a,64a), et à la voilure (4) par le sommet (30b, 32b, 62b, 64b) opposé à cette même base.

10. Dispositif d'accrochage (100) d'un moteur selon l'une quelconque des revendications 1 à 8, **caractérisé en ce qu'**au moins une manille triangulaire (30,32,62,64) est raccordée à la structure rigide (8) par l'un de ses sommets (30b,32b,62b,64b), et à la voilure (4) par la base (30a,32a,62a,64a) opposée à ce même sommet.

## Claims

1. Hanging device (1,100) connecting an engine (2) to a aircraft wing (4), said device comprising a rigid structure (8) and hanging equipment (10) interposed between said rigid structure (8) and the wing (4), said hanging equipment (10) comprising a forward attachment (14) and a rear attachment (16) including at least one triangular shackle (62,64) placed in a vertical plane aligned along a transverse direction (Y) of the aircraft, said forward attachment 14 being constituted of two half-attachements (14a, 14b) arranged respectively on one side and the other of a vertical plane passing through a longitudinal axis (5) of the engine (2), **characterised by** the fact that each half-attachment (14a, 14b) comprises at least one triangular shackle (30, 32) placed in a vertical plane aligned along a longitudinal direction (X) of the aircraft, and so that said hanging equipment (10) is made up exclusively of the aforementioned forward (14) and rear (16) attachments.

2. Hanging device (1, 100) for an engine (2) as claimed in claim 1 **characterized by** each of two half-attachements (14a, 14b) being designed so as to take up forces along the longitudinal direction (X) and along a vertical direction (Z) of said aircraft, and by said rear attachement (16) being designed so as to take up forces along the transverse direction (Y) and along the vertical direction (Z).

3. Hanging device (1, 100) for an engine (2) as claimed in claim 1 **characterised by** the fact that the rear attachment (16) is made up of a pair of triangular shackles (66) placed in vertical planes aligned along the transverse direction (Y) of the aircraft, arid so that the forward attachment (14) is made up, on one side and the other of the vertical plane passing through the longitudinal axis (5) of the engine (2), of a pair of triangular shackles (34) placed in vertical planes aligned along the longitudinal direction (X) of the aircraft.

4. Hanging device (1,100) for an engine (2) as claimed in claim 3, **characterised by** the fact that the aforementioned pair of triangular shackles (66) on the rear attachment (16) are connected to the rigid structure (8) and to the wing (4) of the aircraft using pins (72, 74, 86) aligned along the longitudinal direction (X) of the aircraft.

5. Hanging device (1,100) for an engine (2) as claimed in claim 3 or in claim 4, **characterised by** the fact that each of the two pairs of triangular shackles (34) on the forward attachment(14) is connected to the rigid structure (8) and to the wing (4) of the aircraft using pins (40, 42, 52) aligned along the transverse direction (Y) of the aircraft.

6. Hanging device (1,100) for an engine (2) as claimed in any of claims 3 to 5, **characterised by** the fact that said rear attachment (16) is furthermore comprising a bracket (56) integral with the rigid structure (8), connected to the aforementioned pair of shackles (66) by at last one pin (70, 72) aligned in the longitudinal direction (X) of the aircraft, and by the fact that the aforementioned rear attachment (16) is also comprising a bracket (76) integral with the wing (4), connected to the aforementioned pair of triangular shackles (66) by at least one pin (86) aligned in the longitudinal direction (X) of this aircraft.

7. Hanging device (1,100) for an engine (2) as claimed in any of claims 3 to 6, **characterised by** the fact that the aforementioned forward attachment (14) is furthermore comprising two brackets (24) integral with the rigid structure (8), with each bracket (24) connected to the aforementioned pair of triangular shackles (34) by at last one pin (40,42) aligned in the transverse direction (Y) of the aircraft, and by the fact that the aforementioned forward attachment (14) is also comprising two brackets (44,54) integral with the wing (4), with each bracket (44,54) being connected to one the two pairs of triangular shackles (34) by at least one pin (52) aligned in the transverse direction (Y) of this aircraft.

8. Hanging device (1,100) for an engine (2) as claimed in any of the previous claims, **characterised by** the fact that each pair of triangular shackles (30,32,62,64) is connected to the rigid structure (8) and to the wing (4) of the aircraft using three pins (40,42,52,72,74,86) passing through it, close, respectively, to each of its three apices (30b, 32b, 62b, 64b) .

9. Hanging device (1) for an engine (2) as claimed in any of the previous claims, **characterised by** the fact that at least one triangular shackle (30,32,62,64) is connected to the rigid structure (8) by one of its bases (30a,32a,62a,64a), and to the wing (4) by the apex (30b,32b,62b,64b) opposite this base.

10. Hanging device (100) for an engine as claimed in any of the previous claims 1 to 8, **characterised by** the fact that at least one triangular shackle (30,32,62,64) is connected to the rigid structure (8) by one of its apices (30b,32b,62b,64b), and to the wing (4) by the base (30a, 32a, 62a, 64a) opposite this apex.

## Patentansprüche

1. Aufhängungsvorrichtung (1,100), die ein Triebwerk (2) mit einem Tragwerk (4) eines Luftfahrzeugs verbindet, wobei die Vorrichtung eine starre Struktur (8) sowie zwischen die starre Struktur (8) und das Tragwerk (4) eingefügte Aufhängungsmittel (10) aufweist, und die Aufhängungsmittel (10) ein vorderes Befestigungselement (14) sowie ein hinteres Befestigungselement (16), das mindestens einen dreieckigen Schäkel (62,64) aufweist, welcher in einer in einer Transversalrichtung (Y) des Luftfahrzeugs ausgerichteten Vertikalebene angeordnet ist, umfassen, wobei das vordere Befestigungselement (14) aus zwei Befestigungselementhälften (14a,14b) gebildet ist, welche jeweils auf der einen und der anderen Seite einer vertikalen, durch die Longitudinalachse (5) des Triebwerks (2) hindurchgehenden Ebene angeordnet sind,
**dadurch gekennzeichnet, dass**
jede Befestigungselementhälfte (14a,14b) mindestens einen dreieckigen Schäkel (30,32) aufweist, der in einer in einer Longitudinalrichtung (X) des Luftfahrzeugs ausgerichteten Vertikalebene angeordnet ist, und dass die Aufhängungsmittel (10) ausschließlich von dem vorderen Befestigungselement (14) und dem hinteren Befestigungselement (16) gebildet sind.

2. Aufhängungsvorrichtung (1,100) eines Triebwerks (2) nach Anspruch 1, **dadurch gekennzeichnet, dass** jede der zwei Befestigungselementhälften (14a,14b) so ausgestaltet ist, dass sie Kräfte aufnehmen kann, die in der Longitudinalrichtung (X) und der Vertikalrichtung (Z) des Luftfahrzeugs ausgeübt werden, und dass das hintere Befestigungselement (16) so ausgestaltet ist, dass es in der Transversalrichtung (Y) und der Vertikalrichtung (Z) ausgeübte Kräfte aufnehmen kann.

3. Aufhängungsvorrichtung (1,100) eines Triebwerks (2) nach Anspruch 1 oder Anspruch 2, **dadurch gekennzeichnet, dass** das hintere Befestigungselement (16) ein Paar dreieckiger Schäkel (66) aufweist, die in Vertikalebenen angeordnet sind, die in der Transversalrichtung (Y) des Luftfahrzeugs ausgerichtet sind, und dass das vordere Befestigungselement (14) auf beiden Seiten der durch die Longitudinalachse (5) des Triebwerks (2) hindurchgehenden Vertikalebene ein Paar dreieckiger Schäkel (34) aufweist, welche in Vertikalebenen angeordnet sind, die in der Longitudinalrichtung (X) des Luftfahrzeugs ausgerichtet sind.

4. Aufhängungsvorrichtung (1,100) eines Triebwerks (2) nach Anspruch 3, **dadurch gekennzeichnet, dass** das Paar dreieckiger Schäkel (66) des hinteren Befestigungselements (16) mit der starren Struktur (8) und dem Tragwerk (4) des Luftfahrzeugs über Achsen (72,74,86) verbunden ist, die in der Longitudinalrichtung (X) dieses Luftfahrzeugs ausgerichtet sind.

5. Aufhängungsvorrichtung (1,100) eines Triebwerks (2) nach Anspruch 3 oder Anspruch 4, **dadurch gekennzeichnet, dass** jedes der zwei Paare dreieckiger Schäkel (34) des vorderen Befestigungselements (14) mit der starren Struktur (8) und dem Tragwerk (4) des Luftfahrzeugs über Achsen (40,42,52) verbunden ist, die in der Transversalrichtung (Y) des Luftfahrzeugs ausgerichtet sind.

6. Aufhängungsvorrichtung (1,100) eines Triebwerks (2) nach einem der Ansprüche 3 bis 5, **dadurch gekennzeichnet, dass** das hintere Befestigungselement (16) außerdem ein mit der starren Struktur (8) fest verbundenes bzw. einstückiges Beschlagteil (56) aufweist, das mit dem Paar dreieckiger Schäkel (66) über mindestens eine, in der Longitudinalrichtung (X) dieses Luftfahrzeugs ausgerichtete Achse (70,72) verbunden ist, und dass das hintere Befestigungselement (16) ebenfalls ein mit dem Tragwerk (4) einstückiges bzw. fest verbundenes Beschlagteil (76) aufweist, das mit dem Paar dreieckiger Schäkel (66) über mindestens eine in der Longitudinalrichtung (X) dieses Luftfahrzeugs ausgerichtete Achse (86) verbunden ist.

7. Aufhängungsvorrichtung (1,100) eines Triebwerks (2) nach einem der Ansprüche 3 bis 6, **dadurch gekennzeichnet, dass** das vordere Befestigungselement (14) außerdem zwei mit der starren Struktur (8) fest verbundene bzw. einstückige Beschlagteile (24) aufweist, und jedes Beschlagteil (24) mit einem der zwei Paare dreieckiger Schäkel (34) über mindestens eine in der Transversalrichtung (Y) dieses Luftfahrzeugs ausgerichtete Achse (40,42) verbunden ist, und dass das vordere Befestigungselement (14) auch zwei mit dem Tragwerk (4) fest verbundene bzw. einstückige Beschlagteile (44,54) aufweist, wobei jedes Beschlagteil (44,54) mit einem der zwei Paare dreieckiger Schäkel (34) mit mindestens einer in der Transversalrichtung (Y) dieses Luftfahrzeugs ausgerichteten Achse (52) verbunden ist.

8. Aufhängungsvorrichtung (1,100) eines Triebwerks (2) nach einem der vorangehenden Ansprüche, **dadurch gekennzeichnet, dass** jeder dreieckige Schäkel (30,32,62,64) mit der starren Struktur (8) und dem Tragwerk (4) des Luftfahrzeugs mittels dreier Achsen (40,42,52,72,74,86) verbunden ist, die ihn jeweils in Nähe seiner drei Scheitel (30b,32b,62b,64b) durchsetzen.

9. Aufhängungsvorrichtung (1) eines Triebwerks (2) nach einem der vorangehenden Ansprüche, **dadurch gekennzeichnet, dass** mindestens ein dreieckiger Schäkel (30,32,62,64) mit der starren Struktur (8) über eine seiner Basen (30a,32a,62a,64a) und mit dem Tragwerk (4) über den dieser Basis gegenüberliegenden Scheitel (30b,32b,62b,64b) verbunden ist.

10. Aufhängungsvorrichtung (100) eines Triebwerks gemäß einem der Ansprüche 1 bis 8, **dadurch gekennzeichnet, dass** mindestens ein dreieckiger Schäkel (30,32,62,64) mit der starren Struktur (8) über einen seiner Scheitel (30b,32b,62b,64b) und mit dem Tragwerk (4) über die diesem Scheitel gegenüberliegende Basis (30a,32a,62a,64a) verbunden ist.
